# EUROPEAN PATENT APPLICATION

(11) **EP 4 249 638 A1**
(43) Date of publication of application: **27.09.2023**
(21) Application number: 22163340.7
(22) Date of filing: 21.03.2022
(51) Int. Cl.: C25B 1/04, C25B 13/00, C25B 15/02, C25B 15/023, H01M 10/52

(54) **PERFORMING AN ELECTROLYSIS**

(71) Applicant: L'Air Liquide, Société Anonyme pour l'Etude et l'Exploitation des Procédés Georges Claude, 75007 Paris (FR)
(72) Inventor: Do, Nga Thi Quynh, 60388 Frankfurt am Main (DE)
(74) Representative: Schwenderling, Jens

(57) **Abstract**

Method for performing an electrolysis using an electrolysis stack (2) having multiple electrolysis cells (3), wherein each of the electrolysis cells (3) has:
- an anode space (4) with an anode (6),
- a cathode space (5) with a cathode (7),
- a membrane (8) that separates the anode space (4) and the cathode space (5) from each other,
- a recombination catalyst (9),
wherein the method comprises:
- feeding an electrolysis medium to the electrolysis stack (2) and determining a flow rate at which the electrolysis medium is fed to the electrolysis stack (2),
- providing electrical energy to the electrolysis stack (2) for performing the electrolysis with the electrolysis medium fed to the electrolysis stack (2),
- determining a degree of degradation of the membranes (8) based on the determined flow rate of the electrolysis medium.

## Description

The invention is directed to a method for performing an electrolysis as well as to a respective arrangement.

Membranes used in electrolysis cells are subject to degradation. In order to be able to replace the membranes or electrolysis cell in time, it is desirable to be able to monitor membrane degradation. According to the prior art, this can be done by monitoring the cell voltage. However, in particular membrane thinning is a known problem. This cannot be detected reliably by means of a voltage measurement. If the membrane thickness decreases, the membrane becomes more permeable. This can cause contamination of the electrolysis medium and of the electrolysis products.

The object of the invention is to improve the prior art so that the degree of membrane degradation can be monitored particularly efficiently, in particular with respect to membrane thinning.

The object is solved with the method and the arrangement according to the independent claims. Advantageous refinements are presented in the dependent claims. The features described in the claims and in the description can be combined with each other in any technologically reasonable manner.

According to the invention a method is presented for performing an electrolysis using an electrolysis stack having multiple electrolysis cells, wherein each of the electrolysis cells has:
- an anode space with an anode,
- a cathode space with a cathode,
- a membrane that separates the anode space and the cathode space from each other,
- a recombination catalyst,
wherein the method comprises:
- feeding an electrolysis medium to the electrolysis stack and determining a flow rate at which the electrolysis medium is fed to the electrolysis stack,
- providing electrical energy to the electrolysis stack for performing the electrolysis with the electrolysis medium fed to the electrolysis stack,
- determining a degree of degradation of the membranes based on the determined flow rate of the electrolysis medium.

The method can be used for electrolysis of any electrolysis medium. Preferably, the electrolysis medium is liquid, in particular water. In particular, the electrolysis medium can be water only. Alternatively, the electrolysis medium may be water that contains dissolved salts such as KOH for alkaline electrolysis or electrolysis using anion exchange membrane cells. The electrolysis products are preferably gaseous. In the case of water, hydrogen and oxygen can be obtained as the electrolysis products. The method is intended to be used for an industrial scale electrolysis. For example, it is preferred that at least one of the electrolysis products is obtained at a rate of 250 to 1500 Nm³ per hour per electrolysis stack. This applies, in particular, to the production of hydrogen in the case of water electrolysis. The electrolysis is preferably performed in an automated way.

The method is performed using an electrolysis stack. That is, the method can be performed with one or more electrolysis stacks. Preferably, the electrolysis stacks each have a maximum rated DC power consumption in the range of 0.5 to 20 MW, in particular in the range of 3 to 10 MW. The described method is preferably used for industrial scale electrolysis. In particular, this is to be understood in contrast to experimental setups on a laboratory scale. The industrial scale can be quantified in terms of the maximum rated DC power consumption of the electrolysis stack(s). The maximum rated DC power consumption is what is commonly used to describe electrolysis stacks. For example, a "5 MW electrolysis stack" has a maximum rated DC power consumption of 5 MW.

The electrolysis is performed with the electrolysis medium within the electrolysis stack. The electrolysis medium can be supplied to the electrolysis stack continuously, for example via a feed installation. In particular, the electrolysis medium can be circulated by means of the feed installation, in particular through the electrolysis stack and further elements such as a separator and/or a heat exchanger. That is, the electrolysis medium can enter the electrolysis stack, where the electrolysis is performed. Thereby, the electrolysis medium is converted into the electrolysis products. However, usually not the entire electrolysis medium present within the electrolysis stack reacts within the electrolysis stack. The remaining electrolysis medium can be guided out of the electrolysis stack. This remaining electrolysis medium is mixed with the electrolysis products. After having separated the electrolysis products from the electrolysis medium, for example within a separator, the electrolysis medium can be fed back to the electrolysis stack. To this end, the circle is closed. This is supposed to be understood such that there is a closed loop path, along which the electrolysis medium can flow, which involves the electrolysis stack. However, the electrolysis medium is continuously converted into the electrolysis products, such that there is a loss of electrolysis medium. In order to compensate for such losses and for potential other losses, the feed installation preferably comprises an inlet, via which new electrolysis medium can be introduced into the circulation. That is, a certain amount of the electrolysis medium introduced into the circulation via the inlet can pass the electrolysis stack one or several times, until this particular amount of the electrolysis medium is converted into the electrolysis products.

The electrolysis stack has multiple electrolysis cells. Each of the electrolysis cells has an anode space and a cathode space, which are separated from each other by a membrane. Within the anode space, an anode is arranged. The anode can be a mesh-electrode or any other type of electrode. Within the cathode space, a cathode is arranged. The cathode can be a mesh-electrode or any other type of electrode. In operation, the anode space is filled at least in part with an electrolysis medium so that the anode is in contact with the electrolysis medium and the cathode space is filled at least in part with an electrolysis medium so that the cathode is in contact with the electrolysis medium. In the anode space and in the cathode space the same electrolysis medium or different electrolysis media can be used. The membrane is permeable for ions. In the case of water electrolysis, the membrane is permeable for oxygen and/or hydrogen ions.

By applying an electrical voltage between the anode and the cathode of the electrolysis cell, the electrolysis can be performed with the electrolysis medium. This can be done with all electrolysis cells of the electrolysis stack simultaneously.

Each of the electrolysis cells can have a respective anode and a respective cathode. However, it is possible and even preferred that the anode of a first of the electrolysis cells and the cathode of a neighboring of the electrolysis cells are formed in one piece. Such an element can be referred to as a bipolar plate that serves as the anode for the first electrolysis cell and as a cathode for the neighboring electrolysis cell.

Ideally, the anode product is produced in the anode space and the cathode product is produced in the cathode space, wherein the membrane prevents the anode product from entering the cathode space and the cathode product from entering the anode space. To this end, the anode and cathode products do not come into contact with each other. However, in reality, the membrane is not perfectly impermeable for the anode product and the cathode product. Hence, it is possible that a small amount of the cathode product can be found in the anode space and/or that a small amount of the anode product can be found in the cathode space. For example in the case of water electrolysis, this is a safety hazard since a mixture of hydrogen and oxygen is highly explosive.

In order to reduce the amount of the cathode product in the anode space and/or in order to reduce the amount of the anode product in the cathode space, each of the electrolysis cells comprises a recombination catalyst. The recombination catalyst is configured for enhancing the recombination of the electrolysis products to the electrolysis medium. For example, in the case of water electrolysis, the recombination catalyst is configured to enhance the recombination of oxygen and hydrogen to water. Examples for such a catalyst are PtCo and PtRu. By recombining oxygen and hydrogen to water, the risk of an explosion is reduced.

The recombination catalyst can be arranged within the anode space and/or within the cathode space. The recombination catalyst can have any shape. For example, the recombination catalyst can be configured as a solid plate. Alternatively, the recombination catalyst can be mixed with other material, for example a catalyst configured for enhancing the electrolysis reaction. The latter can be referred to as an electrolysis catalyst.

The method comprises feeding an electrolysis medium to the electrolysis stack and determining a flow rate at which the electrolysis medium is fed to the electrolysis stack. The electrolysis medium can be fed continuously to the electrolysis stack. Thereby, the electrolysis can be performed continuously under constant conditions. The electrolysis medium can be fed separately to the anode spaces and the cathode spaces or the electrolysis medium can be fed jointly to the anode spaces and the cathode spaces. The flow rate of the electrolysis medium can be determined by measurement and/or, for example, by reading from a control unit. For example, the flow rate can be measured using a flow meter within the electrolysis medium feed. However, it is also possible to measure the flow rate at a source of the electrolysis medium in that it is measured how much of the electrolysis medium has left the source. The flow rate of the electrolysis medium can be determined continuously or at discrete time intervals, in particular periodically. To this end, a change in the flow rate can be detected.

In order to perform the electrolysis with the electrolysis medium fed to the electrolysis stack, electrical energy is provided to the electrolysis stack. This can be done in that an electrical voltage is applied to the electrodes of the electrolysis stack. The electrical energy is preferably provided to the electrolysis stack while the electrolysis medium is fed to the electrolysis stack. In that case, the electrolysis medium is fed to the electrolysis stack while the electrolysis is performed.

With the described method, the degradation of the membranes can be monitored. In particular, membrane thinning can be monitored. This is because it was found that the recombination of the electrolysis products enhanced by the recombination catalyst reduces the demand for electrolysis medium to be fed to the electrolysis stack. In the case of water electrolysis, for example, membrane thinning can cause hydrogen to penetrate to the membrane into the anode space. Therein, the hydrogen can be recombined with oxygen generated at the anode so as to form water. This reduces the amount of water that has to be fed to the anode space. The flow rate at which the electrolysis medium is fed to the electrolysis stack is thus a measure for membrane thinning. This is particularly true in case the electrolysis medium is fed to the electrolysis stack depending on a demand for the electrolysis medium. This can be realized, for example, in that the amount of the obtained electrolysis products is monitored.

The same applies to any other type of membrane degradation that results in a change in membrane permeability. To this end, the described method cannot only be used for monitoring membrane thinning, but also for monitoring membrane degradation in general.

According to the described method, a degree of degradation of the membranes is determined based on the determined flow rate of the electrolysis medium. The degree of degradation can be, for example, a measure for the membrane thickness. For example, a degree of degradation of 20 % can mean that the thickness of the membrane is 80 % of its initial value. However, not only membrane thinning can be monitored with the described method.

The degree of degradation is determined for the membranes of the electrolysis cells of the electrolysis stack. In general, it can be assumed that all these membranes degrade similarly. However, should this not be the case, will the described method provide an average value that covers the membranes of all electrolysis cells that receive the electrolysis medium of which the flow rate is determined.

According to a preferred embodiment the method further comprises:
- issuing a warning,
- interrupting the electrolysis and/or
- performing maintenance on the membranes,
in case the determined degree of degradation of the membranes exceeds a threshold value. The "and" case is preferred.

Once the degree of degradation has been determined, appropriate action can be taken. According to the present embodiment, at least one of three possible actions is taken in case the determined degree of degradation of the membranes exceeds a threshold value. The threshold value can be the same for all three possibilities or a respective threshold value can be provided for each of the possibilities. The threshold can be predetermined, for example, in that the threshold is input into and/or stored within a control unit. The determined degree of degradation is preferably compared with the threshold value continuously or at discrete time intervals, in particular periodically.

A warning can be issued for example in a visual and/or in an acoustic manner. This is reasonable since degradation of the membrane can result in the mixing of anode product and cathode product, which can be a safety hazard as is the case with water electrolysis.

Alternatively or additionally, the electrolysis can be interrupted. This can be done automatically, for example, in that a control unit switches off the electrical voltage applied to the electrolysis stack once the determined degree of degradation of the membranes exceeds the threshold value. Alternatively, the electrolysis can be interrupted manually, for example, in that an operator pushes a respective button once the above described warning has been issued.

Alternatively or additionally, the maintenance on the membranes can be performed. This can be done, for example, by replacing the degraded membranes with new membranes. Thereby, not only is the degradation detected and a safety hazard averted. Moreover, the source of the safety hazard is eliminated.

In the present embodiment, it is merely distinguished between "degraded" and "not degraded". However, with the described method the degree of degradation can be determined quantitatively. This fact is made use of in the following preferred embodiments.

According to one of these preferred embodiments of the method the electrical energy is provided to the electrolysis stack depending on the determined degree of degradation of the membranes.

In the present embodiment, the electrolysis load can be scheduled in view of the membrane degradation. For example, the load can be reduced with increasing membrane degradation. This way, membrane degradation can be slowed.

The present embodiment can be combined with the previous embodiment. For example, the electrical energy provided to the electrolysis stack can be reduced to zero once the above described threshold is exceeded. To this end, the electrolysis is interrupted.

According to another of these preferred embodiments of the method a maintenance of the electrolysis stack is scheduled based on the determined degree of degradation of the membranes.

Not only can the maintenance of the membranes be performed once the above described threshold has been exceeded. Moreover, it is possible to predict when this is likely to be the case, for example by extrapolating the determined degree of degradation. This way, it can be planned ahead.

According to a further preferred embodiment of the method the electrolysis medium comprises water and the recombination catalysts are configured for recombining oxygen and hydrogen to water.

In this embodiment the electrolysis can be referred to as water electrolysis.

According to a further preferred embodiment of the method the recombination catalysts comprise a chemical composition involving platinum.

Examples for such a catalyst are PtCo and PtRu.

According to a further preferred embodiment of the method the recombination catalysts are arranged within the anode space of the respective electrolysis cell.

In general, the recombination catalyst could be arranged in the anode spaces and/or in the cathode spaces. However, in the present preferred embodiment the recombination catalysts are arranged within the anode spaces. This is particularly reasonable in the case of water electrolysis since therein, hydrogen is more likely to penetrate the membrane into the anode space than oxygen is likely to penetrate into the cathode space.

As a further aspect of the invention an arrangement is presented that comprises:
- an electrolysis stack having multiple electrolysis cells, wherein each of the electrolysis cells has
   ▪ an anode space with an anode,
   ▪ a cathode space with a cathode,
   ▪ a membrane that separates the anode space and the cathode space from each other,
   ▪ a recombination catalyst,
- an electrolysis medium feed fluidly connected to the electrolysis stack,
- a flow meter for measuring a flow rate of the electrolysis medium through the electrolysis medium feed,
- a control unit that is
   ▪ connected electrically to the electrolysis stack for providing electrical energy to the electrolysis stack for performing the electrolysis with the electrolysis medium fed to the electrolysis stack with the electrolysis medium feed,
   ▪ connected electrically to the flow meter for receiving a measurement signal from the flow meter, and
   ▪ configured for determining a degree of degradation of the membrane based on the measurement signal received from the flow meter.

The advantages and features of the method are transferrable to the arrangement, and vice versa. The arrangement is preferably used according to the method. The method is preferably performed using the arrangement.

By means of the electrolysis medium feed, the electrolysis medium can be fed to the electrolysis stack. By means of the flow meter a flow rate at which the electrolysis medium is fed to the electrolysis stack can be determined by measurement. By means of the control unit, electrical energy can be provided to the electrolysis stack for performing the electrolysis with the electrolysis medium fed to the electrolysis stack. To this end, the control unit is preferably connected electrically to the electrodes of the electrolysis stack. Also, by means of the control unit the degree of degradation of the membranes can be determined based on the determined flow rate of the electrolysis medium. To this end, the control unit is connected electrically to the flow meter for receiving a measurement signal from the flow meter.
In a preferred embodiment of the arrangement the control unit is further configured for:
- issuing a warning,
- interrupting the electrolysis and/or
- issuing a signal indicating that maintenance on the membranes (8) is supposed to be performed,
in case the determined degree of degradation of the membranes (8) exceeds a threshold value.

In a further preferred embodiment of the arrangement the control unit is further configured for providing the electrical energy to the electrolysis stack depending on the determined degree of degradation of the membranes.

In a further preferred embodiment of the arrangement the control unit is further configured for scheduling a maintenance of the electrolysis stack based on the determined degree of degradation of the membranes.

In the following the invention will be described with respect to the figures. The figures show preferred embodiments, to which the invention is not limited. The figures and the dimensions shown therein are only schematic. The figures show:
- Fig. 1:: an arrangement according to the invention,
- Fig. 2:: a detailed view of a first embodiment of the electrolysis stack of the arrangement of Fig. 1, and
- Fig. 3:: a detailed view of a second embodiment of the electrolysis stack of the arrangement of Fig. 1.

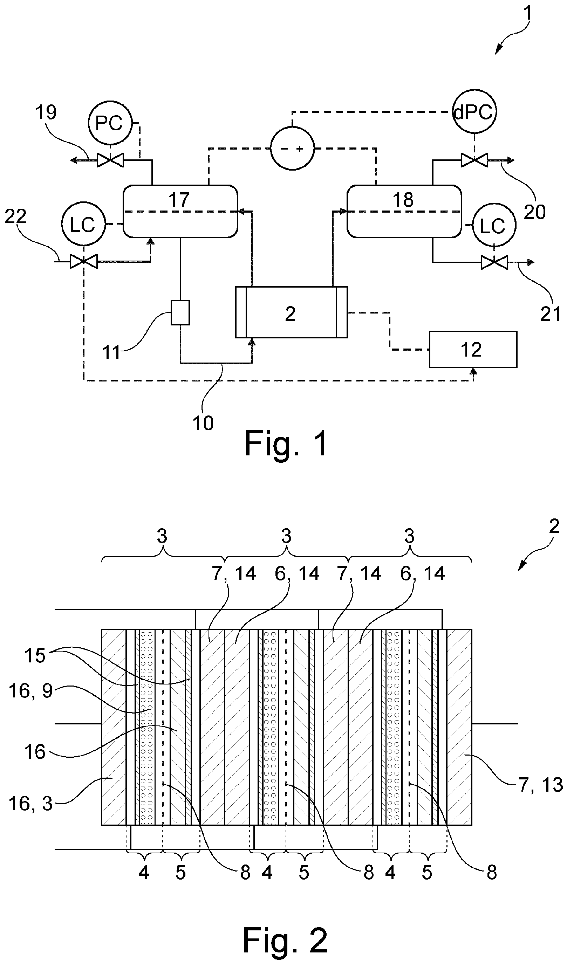

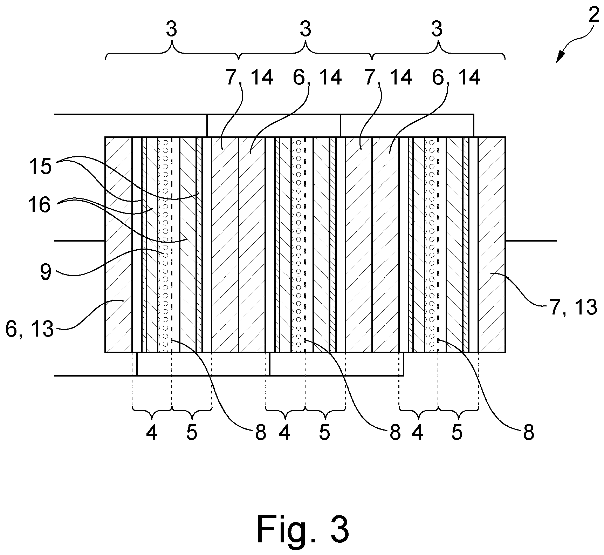

Fig. 1 shows an arrangement 1 comprising an electrolysis stack 2. The electrolysis stack 2 is shown in more detail in Fig. 2 and 3. Therein, two embodiments of the electrolysis stack 2 are shown. Since in Fig. 1 the degree of detail is lower than in Fig. 2 and 3, the electrolysis stack 2 of Fig. 1 could be either of the electrolysis stacks 2 shown in Fig. 2 and 3.

The arrangement 1 further comprises an electrolysis medium feed 10 fluidly connected to the electrolysis stack 2 and a flow meter 11 for measuring a flow rate of the electrolysis medium through the electrolysis medium feed 10.

Via the electrolysis medium feed 10 water can be fed to the electrolysis stack 2 as an electrolysis medium. In the shown example, the electrolysis medium feed 10 is realized as a single feed that provides the water to both anode spaces and cathode spaces of the electrolysis stack 2.

Within the electrolysis stack 2, an electrolysis can be performed with the water. The water remaining in the anode spaces can be guided together with the anode product, i.e. oxygen, from the electrolysis stack 2 to an anode separator 17. From the anode separator 17 the gaseous oxygen can be extracted via an oxygen outlet 19 and the liquid water can be fed back to the electrolysis stack 2. In order to compensate for losses of the water, new water can be introduced into the anode separator 17 via a water feed 22.

The water remaining in the cathode spaces of the electrolysis stack 2 can be guided together with the cathode product, i.e. hydrogen, from the electrolysis stack 2 to a cathode separator 18. From the cathode separator 18 the gaseous hydrogen can be extracted via a hydrogen outlet 20 and the liquid water can be extracted via a water outlet 21.
Also, the arrangement 1 comprises a control unit 12 that is
▪ connected electrically to the electrolysis stack 2 for providing electrical energy to the electrolysis stack 2 for performing the electrolysis with the electrolysis medium fed to the electrolysis stack 2 with the electrolysis medium feed 10,
▪ connected electrically to the flow meter 11 for receiving a measurement signal from the flow meter 11, and
▪ configured for determining a degree of degradation of membranes 8 based on the measurement signal received from the flow meter 11.
With the arrangement 1, an electrolysis can be performed using the electrolysis stack 2. The method comprises:
- feeding an electrolysis medium to the electrolysis stack 2 and determining a flow rate at which the electrolysis medium is fed to the electrolysis stack 2,
- providing electrical energy to the electrolysis stack 2 for performing the electrolysis with the electrolysis medium fed to the electrolysis stack 2,
- determining a degree of degradation of the membranes 8 based on the determined flow rate of the electrolysis medium.

Fig. 2 shows a detailed view of a first embodiment of the electrolysis stack 2 of the arrangement 1 of Fig. 1. Therein, it can be seen that the electrolysis stack 2 comprises multiple electrolysis cells 3. Each of the electrolysis cells 3 has an anode space 4 with an anode 6, a cathode space 5 with a cathode 7. The anode 6 of the left electrolysis cell 3 and the cathode 7 of the right electrolysis cell 3 are configured as outer electrodes 13. These can be considered to be the electrodes of the electrolysis stack 2. The remaining anodes 6 and cathodes 7 are realized in pairs by means of a respective bipolar plate 14.

Further, the electrolysis cells 3 each comprise a membrane 8 that separates the anode space 4 and the cathode space 5 from each other. Also, a respective recombination catalyst 9 is arranged within each of the anode spaces 4. The recombination catalyst 9 is mixed with an electrolysis catalyst 16 configured for enhancing the electrolysis. In the cathode spaces 5, only an electrolysis catalyst 16 is provided. Both the recombination catalysts 9 and the electrolysis catalysts 16 are held by a respective support 15. For clarity, only the recombination catalyst 9, the support 15 and the electrolysis catalysts 16 of the right electrolysis cell 3 are indicated with respective reference numerals.

Fig. 3 shows a detailed view of a second embodiment of the electrolysis stack 2 of the arrangement 1 of Fig. 1. In contrast to the embodiment of Fig. 2, herein the recombination catalysts 9 are provided distinctly from the electrolysis catalyst 16 of the respective electrolysis cell 3.

### List of reference numerals

- 1: arrangement
- 2: electrolysis stack
- 3: electrolysis cell
- 4: anode space
- 5: cathode space
- 6: anode
- 7: cathode
- 8: membrane
- 9: recombination catalyst
- 10: electrolysis medium feed
- 11: flow meter
- 12: control unit
- 13: outer electrode
- 14: bipolar plate
- 15: support
- 16: electrolysis catalyst
- 17: anode separator
- 18: cathode separator
- 19: oxygen outlet
- 20: hydrogen outlet
- 21: water outlet

## Claims

1. Method for performing an electrolysis using an electrolysis stack (2) having multiple electrolysis cells (3), wherein each of the electrolysis cells (3) has:
- an anode space (4) with an anode (6),
- a cathode space (5) with a cathode (7),
- a membrane (8) that separates the anode space (4) and the cathode space (5) from each other,
- a recombination catalyst (9),
wherein the method comprises:
- feeding an electrolysis medium to the electrolysis stack (2) and determining a flow rate at which the electrolysis medium is fed to the electrolysis stack (2),
- providing electrical energy to the electrolysis stack (2) for performing the electrolysis with the electrolysis medium fed to the electrolysis stack (2),
- determining a degree of degradation of the membranes (8) based on the determined flow rate of the electrolysis medium.

2. Method according to claim 1, wherein the method further comprises:
- issuing a warning,
- interrupting the electrolysis and/or
- performing maintenance on the membranes (8),
in case the determined degree of degradation of the membranes (8) exceeds a threshold value.

3. Method according to any of the preceding claims, wherein the electrical energy is provided to the electrolysis stack (2) depending on the determined degree of degradation of the membranes (8).

4. Method according to any of the preceding claims, wherein a maintenance of the electrolysis stack (2) is scheduled based on the determined degree of degradation of the membranes (8).

5. Method according to any of the preceding claims, wherein the electrolysis medium comprises water and the recombination catalysts (9) are configured for recombining oxygen and hydrogen to water.

6. Method according to any of the preceding claims, wherein the recombination catalysts (9) comprise a chemical composition involving platinum.

7. Method according to any of the preceding claims, wherein the recombination catalysts (9) are arranged within the anode space (4) of the respective electrolysis cell (2).

8. Arrangement (1) comprising:
- an electrolysis stack (2) having multiple electrolysis cells (3), wherein each of the electrolysis cells (3) has
▪ an anode space (4) with an anode (6),
▪ a cathode space (5) with a cathode (7),
▪ a membrane (8) that separates the anode space (4) and the cathode space (5) from each other,
▪ a recombination catalyst (9),
- an electrolysis medium feed (10) fluidly connected to the electrolysis stack (2),
- a flow meter (11) for measuring a flow rate of the electrolysis medium through the electrolysis medium feed (10),
- a control unit (12) that is
▪ connected electrically to the electrolysis stack (2) for providing electrical energy to the electrolysis stack (2) for performing the electrolysis with the electrolysis medium fed to the electrolysis stack (2) with the electrolysis medium feed (10),
▪ connected electrically to the flow meter (11) for receiving a measurement signal from the flow meter (11), and
▪ configured for determining a degree of degradation of the membranes (8) based on the measurement signal received from the flow meter (11).

9. Arrangement (1) according to claim 8, wherein the control unit (12) is further configured for:
- issuing a warning,
- interrupting the electrolysis and/or
- issuing a signal indicating that maintenance on the membranes (8) is supposed to be performed,
in case the determined degree of degradation of the membranes (8) exceeds a threshold value.
